# EUROPEAN PATENT SPECIFICATION

(11) **EP 2 632 220 B1**
(45) Date of publication and mention of the grant of the patent: **07.11.2018**
(21) Application number: 11850458.8
(22) Date of filing: 08.11.2011
(51) Int. Cl.: H04W 72/04, H04W 28/06

(54) **METHOD AND DEVICE FOR RESOURCE ALLOCATION**
VERFAHREN UND VORRICHTUNG ZUR RESSOURCENZUWEISUNG
PROCÉDÉ ET DISPOSITIF D'ATTRIBUTION DE RESSOURCES

(30) Priority: 24.12.2010 CN 201010606831
(43) Date of publication of application: 28.08.2013
(73) Proprietor: Huawei Technologies Co., Ltd., Longgang District Shenzhen, Guangdong 518129 (CN)
(72) Inventor: ZHANG, Minqi, Shenzhen Guangdong 518129 (CN)
(74) Representative: Pfenning, Meinig & Partner mbB
(86) International application number: PCT/CN2011/081889
(87) International publication number: WO 2012/083761

(56) References cited:
- EP-A1- 2 237 633
- EP-A2- 1 187 404
- WO-A1-2008/111813
- WO-A2-2004/109962
- WO-A2-2010/087617
- CN-A- 1 526 225
- CN-A- 101 119 300
- CN-A- 101 287 299
- CN-A- 101 552 652
- US-A1- 2003 165 162
- US-A1- 2004 185 860
- US-B1- 7 564 861
- RESEARCH IN MOTION LIMITED: "Various issues regarding SR channel handling (VoIP, SRS, etc)", 3GPP DRAFT; R2-081870, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Shenzhen, China; 20080325, 25 March 2008 (2008-03-25), XP050139560, [retrieved on 2008-03-25]

## Description

### TECHNICAL FIELD

The present invention relates to the field of communications technologies, and in particular, to a method for resource allocation and a device.

### BACKGROUND

In LTE (Long Term Evolution, long term evolution) systems, a resource allocation method with semi-persistent scheduling is applicable to services when a size of packets is relatively fixed and the arrival time interval of packets meets a certain rule.

Taking a VoIP (Voice over IP, voice over IP) service as an example, when the arrival period of VoIP packets is 20 ms, a base station or a terminal sends a VoIP packet or receives a newly arrived VoIP packet every 20 ms in the same resource position. In the VoIP service, the base station may allocate resources in advance, where a size of allocated resources includes a size of resources occupied by an original VoIP packet, a Packet Data Convergence Protocol (PDCP, Packet Data Convergence Protocol) layer protocol header, a Radio Link Control (RLC, Radio Link Control Protocol) layer protocol header, and a Media Access Control (MAC, Media Access Control) layer protocol header. The allocated resources are used periodically.

In the prior art, no matter whether the packet undergoes header compression (ROHC, Robust Header Compression), the base station allocates resources for semi-persistent scheduling according to a length of the original packet, which causes waste of resources.

### SUMMARY

In one aspect, the present invention provides a method for resource allocation, including:
calculating a mean value of lengths of at least two compressed packets, where the compressed packets are obtained by performing header compression on original packets; and
allocating resources according to the calculated mean value of the lengths of the at least two compressed packets ,
wherein the calculating (102) and the allocating (103) is applied to a test stage and a stable stage during a transmission of data packets, wherein in the stable stage fluctuation values of the lengths of successive packets are smaller than a preset threshold, whereas in the test stage the fluctuation values of the lengths of successive packets are larger than the preset threshold.

In another aspect, the present invention provides a device, including:
a calculating unit, configured to calculate, in a test stage and a stable stage during a transmission of data packets, a mean value of lengths of at least two compressed packets, where the compressed packets are obtained by performing header compression on original packets; and
an allocating unit, configured to allocate resources, in the test stage and the stable stage during the transmission of data packets, according to the calculated mean value of the lengths of the at least two compressed packets, wherein in the stable stage fluctuation values of the lengths of successive packets are smaller than a preset threshold, whereas in the test stage the fluctuation values of the lengths of successive packets are larger than the preset threshold.

The method for resource allocation and the device according to the embodiments of the present invention, in cases where compressed packets are obtained by performing header compression on original packets, can allocate resources according to a mean value of lengths of the compressed packets, thereby reducing waste of air interface resources during resource allocation and increasing utilization rate of air interface resources.

### BRIEF DESCRIPTION OF DRAWINGS

FIG. 1 is a flowchart of a method for resource allocation according to an embodiment of the present invention;
FIG. 2 is a schematic diagram of a header compression operation;
FIG. 3 is a schematic diagram of a header compression operation in a VoIP service;
FIG. 4 is a schematic diagram of a device according to another embodiment of the present invention;
FIG. 5 is a schematic diagram of a calculating unit;
FIG. 6 is a schematic diagram of another calculating unit; and
FIG. 7 is a schematic diagram of an allocating unit.

### DESCRIPTION OF EMBODIMENTS

The technical solutions in the embodiments of the present invention are hereinafter described clearly with reference to the accompanying drawings in the embodiments of the present invention. Apparently, the embodiments in the following description are only a part rather than all of the embodiments of the present invention. All other embodiments obtained by persons of ordinary skill in the art based on the embodiments of the present invention without creative efforts shall fall within the protection scope of the present invention.

The embodiments of the present invention are applicable to multiple communication systems including LTE systems and LTE Advance systems. The base station described in the embodiments may be an evolved base station or other devices for allocating resources for UEs.

EP 2 237 633 A1 discloses: Methods for transmitting a buffer status report by a communication node in a mobile communication system, and more particularly the definition of rules for triggering, generating and transmitting buffer status reports. Furthermore, a data transmission method utilizing a new set of rules to decide data of which radio bearers is to be transmitted within a given transmission time interval. Moreover, scheduling radio resources within a mobile communication system that is taking into account additional scheduling-relevant information from the buffer status reporting and/or data transmission method.

WO 2008 / 111 813 A1 discloses: A method of transmitting data in a wireless communication system that includes configuring a data operation pattern for a plurality of data blocks with variable size, generating the plurality of data blocks according to the data operation pattern and transmitting the plurality of data blocks. Although a data generating time or size is irregular, data can be transmitted without the need for additional signaling by predicting or deciding the pattern of the data. Although a data generating time or size is not constant, repetitive signaling is not required every transmission.

US 2003 / 165 162 discloses: Due to bandwidth constraints on the wireless link in an IP network, it is useful to compress the headers so as to maximize the utilization of the link. Header compression algorithms make use of the similarity in consecutive headers in a packet flow to compress these headers. A header compression scheme is introduced that makes use of the similarity in consecutive flows from or to a given mobile terminal to compress these headers. Using information theory, the optimal gain to be expected from the use of such a scheme is analyzed. A model is defined for the distribution of the connections of a single user over the address space.

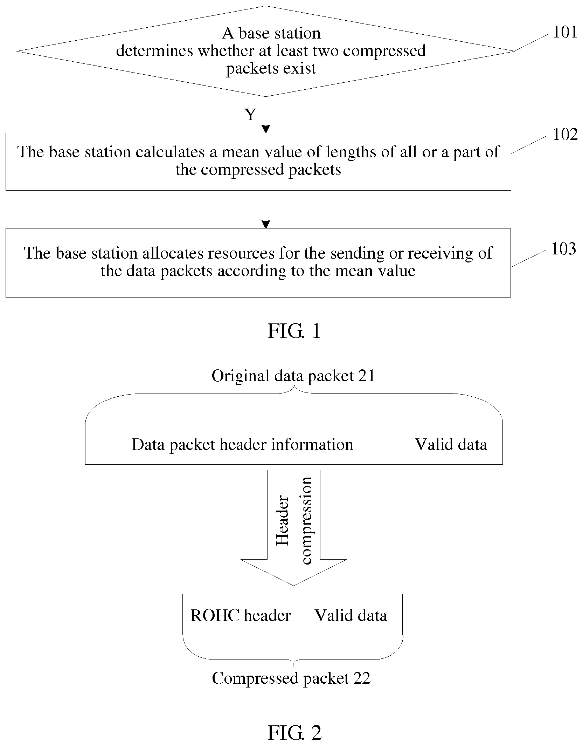

An embodiment of the present invention provides a method for resource allocation. As shown in FIG. 1, this embodiment includes the following steps:
101. A base station determines whether at least two compressed packets exist, where the compressed packets are obtained by performing header compression on original packets. If yes, step 102 is executed.

The header compression in this embodiment means compression of header information in a packet. As shown in FIG. 2, an original packet 21 is a packet without header compression and includes payload and packet header information. A compressed packet 22 is a packet obtained after header compression is performed on the original packet and includes the payload and a ROHC header which is obtained after the packet header information in the original packet 21 is compressed. Because a length of the ROHC header is smaller than a length of the packet header information, a length of the compressed packet 22 is smaller than a length of the original packet 21.

In this step, the base station may determine whether the length of the packet is smaller than a preset threshold, and if yes, determine that the packet is a compressed packet.

102. The base station calculates a mean value of lengths of all or a part of the compressed packets.

It is assumed that in step 101, the base station determines that 10 compressed packets exist, that is, 10 original packets undergo header compression.

Optionally, the base station calculates a mean value of the lengths of the 10 compressed packets or calculates a mean value of the lengths of n compressed packets therein, where n is a positive integer smaller than 10 and the n compressed packets may be selected from the 10 compressed packets randomly or in any other way.

Optionally, the base station calculates a mean value of compression rates of the lengths of the 10 compressed packets or calculates a mean value of compression rates of the lengths of n compressed packets therein, where n is a positive integer smaller than 10 and the n compressed packets may be selected from the 10 compressed packets randomly or in any other way. The compression rate here may be a ratio of the compressed packet 22 to the original packet 21. Then, the base station calculates a product of the mean value of the compression rates and a length of the original packet corresponding to the compressed packet used to calculate the mean value of the compression rates, so as to obtain the mean value of the lengths of the compressed packets. Alternatively, the compression rate here may be a ratio of the length of the ROHC header in the compressed packet 22 to the length of the packet header information in the original packet 21. Then, the base station calculates a product of the mean value of the compression rates and the length of the packet header information in the original packet corresponding to a compressed packet used to calculate the mean value of the compression rates, and adds the length of the payload in the compressed packet, so as to obtain the mean value of the lengths of the compressed packets.

For example, the lengths of the original packets corresponding to the 10 compressed packets are the same and the lengths of packet header information in the original packets are the same. Then the mean value of the lengths of the compressed packets determined by the base station in the above two ways is the same.

103. The base station allocates resources for the sending or receiving of the packets according to the mean value.

In this step, the base station may allocate resources according to the mean value and the lengths of other protocol layer headers. For example, the allocated resources are a sum of the mean value, the length of a Packet Data Convergence Protocol (PDCP) layer header, the length of a Radio Link Control (RLC) layer header, and the length of a Media Access Control (MAC) layer header. For another example, the allocated resources are slightly greater than the sum of the mean value, the length of a PDCP layer header, the length of an RLC layer header, and the length of a MAC layer header. Being slightly greater may be construed as that the allocated resources, though greater than the sum of the mean value and the lengths of the layer headers, are still fewer than the resources allocated based on the mean value of the original packets and the lengths of other protocol layer headers. For example, the mean value is multiplied by an amplification rate X, provided that the value of X makes the allocated resources fewer than the resources allocated based on the mean value of the original packets and the lengths of other protocol layer headers.

In this embodiment, because the length of a compressed packet is smaller than that of the original packet, determining allocated resources according to the length of the compressed packets can reduce waste of air interface resources and thereby increase utilization rate of air interface resources.

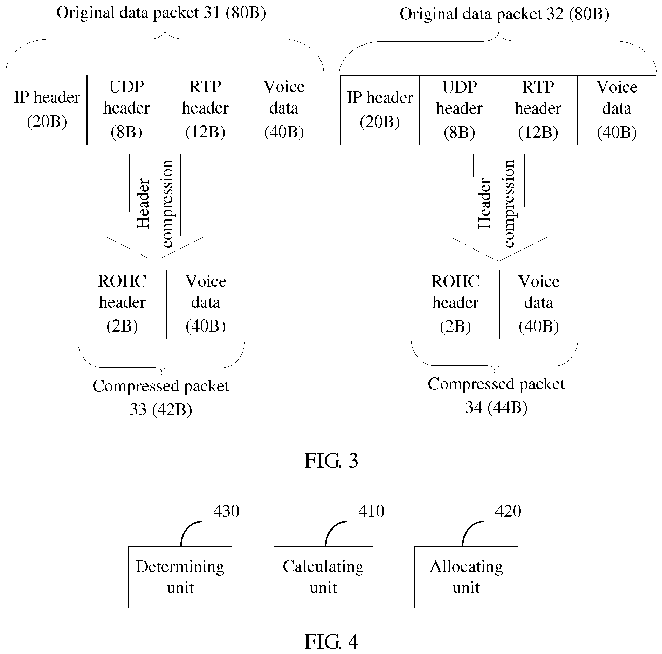

Another embodiment of the present invention describes how resources are allocated according to lengths of compressed packets by taking a VoIP service as an example. As shown in FIG. 3, lengths of two original VoIP packets 31 and 32 are both 80 bytes, where a length of payload of each original VoIP packet and a length of packet header information each are 40 bytes. For example, an IP (Internet Protocol, Internet Protocol) header information in the packet header information is 20 bytes, a UDP (User Datagram Protocol, User Datagram Protocol) header information is 8 bytes, and an RTP (Real-time Transport Protocol, Real-time Transport Protocol) header information is 12 bytes. A length of a compressed packet 33 obtained by performing header compression on the original VoIP packet 31 is 42 bytes, where a length of the payload is 40 bytes and the ROHC header is 2 bytes. A length of the compressed packet 34 obtained by performing header compression on the original VoIP packet 32 is 44 bytes, where a length of the payload is 40 bytes and the ROHC header is 40 bytes.

Optionally, assuming that a preset threshold is 50 bytes, the base station determines that the packet 33 and the packet 34 are compressed packets and calculates their mean value as 43 bytes. Assuming that a length of the PDCP layer header, a length of the RLC layer header, and a length of the MAC layer header are respectively 2 bytes, 3 bytes, and 2 bytes, resources that may be allocated by the base station for the compressed packet 33 and the compressed packet 34 are 50 bytes.

Optionally, a compression rate of a compressed packet may be a ratio of the length of the compressed packet to the length of the original packet. In this case, the compression rate of the packet 33 obtained by the base station according to the lengths of the packet 33 and the original packet 31 is 52.5% and the compression rate of the packet 34 obtained according to the ratio of the length of the packet 34 to the corresponding original length is 55%. Both are lower than 100%. Then, the base station determines that the packet 33 and the packet 34 are both compressed packets and calculates a mean value of the compression rates of the two packets as 53.75%, and then multiplies the mean value of the compression rates by 80 bytes (the length of the original packet 31 or original packet 32) to obtain a mean value of the lengths of the compressed packet 33 and the compressed packet 34 as 43 bytes. Assuming that a length of the PDCP layer header, a length of the RLC layer header, and a length of the MAC layer header are respectively 2 bytes, 3 bytes, and 2 bytes, resources that may be allocated by the base station for the compressed packet 33 and the compressed packet 34 are 50 bytes.

Optionally, a compression rate of a compressed packet may be a ratio of the length of the ROHC header in the compressed packet to a sum of lengths of headers (such as the IP header, the UDP header, and the RTP header) of an original packet. In this case, the compression rate of the packet 33 obtained by the base station is 5% and the compression rate of the packet 34 is 10%. Assuming that a threshold of the compression rate is 20%, the base station determines that both the packet 33 and the packet 34 are compressed packets and calculates a mean value of the compression rates corresponding to the two packets as 7.5%. The base station multiplies the mean value of the compression rates by 40 bytes (a sum of lengths of headers in the original packet 31 or a sum of lengths of headers in the original packet 32) to obtain a mean value of the lengths of the ROHC headers of the compressed packet 33 and the compressed packet 34 as 3 bytes. Then the base station adds 40 bytes (length of voice data in the compressed packet 33 or the compressed packet 34) to obtain the mean value of the lengths of the compressed packet 33 and the compressed packet 34 as 43 bytes. Assuming that a length of the PDCP layer header, a length of the RLC layer header, and a length of the MAC layer header are respectively 2 bytes, 3 bytes, and 2 bytes, resources that may be allocated by the base station for the compressed packet 33 and the compressed packet 34 are 50 bytes.

Optionally, in this embodiment, after the base station determines the mean value of the lengths of the packets, the base station may multiply the mean value by an amplification rate and allocate resources according to the result obtained by multiplying the mean value by the amplification rate. If the amplification rate is higher, the value obtained by multiplying the mean value of the lengths of the compressed packets by the amplification rate is closer to the lengths of the original packets, which guarantees that more packets are transmitted successfully, and the communication quality of UEs is better. If the amplification rate is lower, or even 100%, that is, the mean value of the lengths of the compressed packets is not amplified, air interface resources are saved more effectively. In actual applications, the amplification rate may be set according to a specific need. For example, the amplification rate may be 120%. Assuming that the mean value of the lengths of the compressed packets is 43 bytes, the mean value multiplied by the amplification rate 120% is 51.6 bytes. The base station may use the smallest positive integer that is greater than or equal to 51.6 bytes (which is 52 bytes) as a basis for resource allocation. For example, the base station adds the lengths of the PDCP layer header, the RLC layer header, and the MAC layer header to the smallest positive integer (52 bytes) and knows that the minimum resources to be allocated are 59 bytes.

The embodiment of the present invention is applicable to scenarios where a base station allocates resources for the transmission (for example, sending or receiving) of packets, and also applicable to scenarios where the base station adjusts allocated resources. The embodiment of the present invention is also applicable to a test stage and a stable stage during the transmission process of packets. The stage from the time when the base station (for example, as a packet sender) and the terminal (for example, as a packet receiver) start communication to the time when the communication is stable is called the test stage. The stage from the time when the communication is stable to the time when the communication ends is called the stable stage. The stable state is a state in which the length of transmitted packets remains unchanged or basically unchanged. Multiple methods may be used to determine whether the communication is stable. For example, the difference between the length of a packet and the length of a previous packet or the ratio of the length of a packet to the length of a previous packet is described as a fluctuation value of the packet. If fluctuation values of the lengths of M (M ≥ 2) successive packets are smaller than a preset threshold, for example, 1%, it is considered that the communication enters the stable state, that is, the test stage ends and the stable stage begins.

In another embodiment of the present invention, a base station and a terminal communicate by using a semi-persistent scheduling service and compressed packets. The base station, as the packet sender, may calculate the mean value of lengths of all or a part of the compressed packets in the test stage and determine, according to the mean value, the resources for semi-persistent scheduling allocated in the stable stage. That is, the base station adjusts a size of the resources for semi-persistent scheduling allocated in the test stage or a time period therein to a size of the resources determined according to the mean value of the lengths.

By using the method for resource allocation according to the foregoing embodiments, the mean value of lengths of at least two compressed packets is calculated and resources are allocated according to the mean value. Because the mean value is smaller than the lengths of the original packets, using the method in the embodiments of the present invention in semi-persistent services can reduce the waste of air interface resources during resource allocation and thereby increase the utilization rate of air interface resources.

As shown in FIG. 4, another embodiment of the present invention provides a device, which may be used to implement the method provided in the foregoing embodiments. For example, the device is a base station, which may be used to implement the steps executed by a base station in the foregoing embodiments.

For example, the device provided in this embodiment includes:
a calculating unit 410, configured to calculate a mean value of lengths of at least two compressed packets, where the compressed packets are obtained by performing header compression on original packets; and
an allocating unit 420, configured to allocate resources according to the mean value.

Optionally, the device further includes a determining unit 430, configured to determine that at least two compressed packets exist.

Optionally, the determining unit 430 is specifically configured to determine whether at least two compressed packets exist; the calculating unit 410 is specifically configured to calculate the mean value of lengths of all or a part of the existing compressed packets determined by the determining unit 430, when a determination result of the determining unit 430 is yes; and the allocating unit 420 is configured to allocate resources for the sending or receiving of the packets according to the mean value calculated by the calculating unit 410.

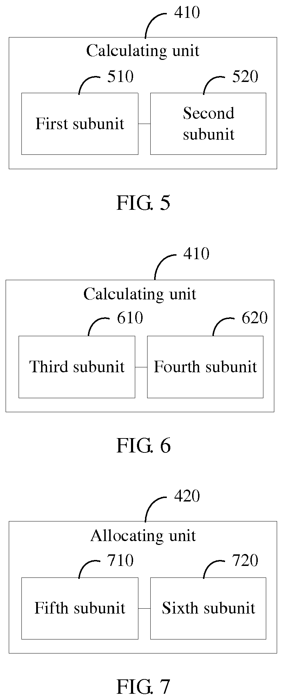

Optionally, as shown in FIG. 5, the calculating unit 410 includes: a first subunit 510, configured to record compression rates of the at least two compressed packets, where the compression rate is a ratio of the length of a compressed packet to the length of an original packet; and a second subunit 520, configured to calculate a mean value of the compression rates of the at least two compressed packets recorded by the first subunit 510 and multiply the mean value of the compression rates of the at least two compressed packets by the lengths of the original packets of the at least two compressed packets to obtain the mean value of the lengths of the at least two compressed packets. For example, when the original packets of the compressed packets have the same length, for example, when the length of an original VoIP service packet is 80 bytes, the calculating unit 410 determines the mean value of the lengths of the at least two compressed packets by using the first subunit 510 and the second subunit 520.

Optionally, a compression rate of a compressed packet recorded by the first subunit 510 shown in FIG. 5 may also be a ratio of the length of the ROHC header in the compressed packet to the sum of lengths of headers in the original packet. In this case, the second subunit 520 is configured calculate the mean value of the compression rates of the at least two compressed packets recorded by the first subunit 510 and multiply the mean value of the compression rates by the length of packet header information in the original packet corresponding to one compressed packet to obtain the mean value of lengths of ROHC headers in the at least two compressed packets, and then add the length of payload in the compressed packet to obtain the mean value of the lengths of the at least two compressed packets. For example, when the original packets corresponding to the compressed packets have the same length and the lengths of packet header information in the original packets are also the same, for example, when the length of an original VoIP packet is 80 bytes, and the length of packet header information in the original packet is 40 bytes, the calculating unit 410 determines the mean value of the lengths of the at least two compressed packets by using the first subunit 510 and the second subunit 520.

Optionally, as shown in FIG. 6, the calculating unit 410 includes a third subunit 610, configured to record the lengths of the at least two compressed packets; and a fourth subunit 620, configured to calculate the mean value of the lengths of the at least two compressed packets. For example, when the original packets corresponding to the compressed packets have the same length or different lengths, the calculating unit 410 may determine the mean value of the lengths of the at least two compressed packets by using the third subunit 610 and the fourth subunit 620.

Optionally, as shown in FIG. 7, the allocating unit 420 includes a fifth subunit 710, configured to multiply the mean value calculated by the calculating unit 410, by an amplification rate, which may be 120%; and a sixth subunit 720, configured to allocate resources according to the mean value amplified by the fifth subunit 710. For example, when the allocating unit increases the set amplification rate, more compressed packets may be transmitted successfully. For another example, when the allocating unit reduces the set amplification rate, more resources may be saved.

The device provided in this embodiment can reduce the waste of air interface resources, and by adjusting the amplification rate, ensure the complete sending (or receiving) of more packets, thereby increasing the utilization rate of air interface resources.

Another embodiment of the present invention provides a system including a device provided in the foregoing embodiments. The device may be used to implement the method provided in the foregoing embodiments. For example, the device is a base station, which may be used to implement the steps executed by a base station in the foregoing embodiments.

From the above description of the embodiments, persons skilled in the art may clearly understand that the present invention may be implemented through software plus necessary universal hardware or implemented through hardware, where in many circumstances, the former is preferred. Based on such understanding, the technical solutions of the present invention in essence, or the parts contributing to the prior art, may be embodied in the form of a software product. The computer software product may be stored in a readable storage medium, such as a floppy disk, a hard disk, or a CD-ROM of a computer and include several instructions that enable a computer device (which may be a personal computer, a server, or a network device) to execute the method described in the embodiments of the present invention.

The foregoing descriptions are merely exemplary embodiments of the present invention, but not intended to limit the protection scope of the present invention. Any variation or replacement made by persons skilled in the art without departing from the technical scope of the embodiments of the present invention shall fall within the protection scope of the present invention. Therefore, the protection scope of the present invention shall be subject to the protection scope of the appended claims.

## Claims

1. A method for resource allocation, comprising:
calculating (102) a mean value of lengths of at least two compressed packets, wherein the compressed packets are obtained by performing header compression on original packets; and
allocating resources (103) according to the calculated mean value of the lengths of the at least two compressed packets,
wherein the calculating (102) and the allocating (103) is applied to a test stage and a stable stage during a transmission of data packets, wherein in the stable stage fluctuation values of the lengths of successive packets are smaller than a preset threshold, whereas in the test stage the fluctuation values of the lengths of successive packets are larger than the preset threshold.

2. The method according to claim 1, wherein before the calculating (102) of the mean value of the lengths of the at least two compressed packets, the method further comprises:
determining (101) that the at least two compressed packets exist.

3. The method according to claim 1 or 2, wherein the calculating (102) of the mean value of the lengths of the at least two compressed packets comprises:
recording compression rates of the at least two compressed packets, wherein the compression rate is a ratio of the length of a compressed packet (22) to the length of an original packet (21); and
calculating a mean value of the compression rates of the at least two compressed packets recorded and multiplying the mean value of the compression rates of the at least two compressed packets by the lengths of the original packets of the at least two compressed packets to obtain the mean value of the lengths of the at least two compressed packets.

4. The method according to claim 1 or 2, wherein the calculating (102) of the mean value of the lengths of the at least two compressed packets comprises:
recording compression rates of the at least two compressed packets, wherein a compression rate is a ratio of the length of an ROHC, robust header compression, header in a compressed packet (22) to the length of the packet header information in the original packet (21),
calculating a product of the mean value of the compression rates and the length of the packet header information in the original packet corresponding to a compressed packet used to calculate the mean value of the compression rates, and adding the length of the payload in the compressed packet, so as to obtain the mean value of the lengths of the compressed packets.

5. The method according to claim 1 or 2, wherein the calculating (102) of the mean value of the lengths of the at least two compressed packets comprises:
recording the lengths of the at least two compressed packets; and
calculating the mean value of the lengths of the at least two compressed packets according to at least two of the recorded lengths of the at least two compressed packets.

6. The method according to any one of claims 1 to 5, wherein the allocating (103) of resources according to the mean value of the lengths of the at least two compressed packets comprises:
multiplying the mean value of the lengths of the at least two compressed packets by an amplification rate; and
allocating resources according to the amplified mean value.

7. A device, comprising:
a calculating unit (410), configured to calculate, in a test stage and a stable stage during a transmission of data packets, a mean value of lengths of at least two compressed packets, wherein the compressed packets are obtained by performing header compression on original packets; and
an allocating unit (420), configured to allocate, in the test stage and the stable stage during the transmission of data packets, resources according to the calculated mean value of the lengths of the at least two compressed packets, wherein in the stable stage fluctuation values of the lengths of successive packets are smaller than a preset threshold, whereas in the test stage the fluctuation values of the lengths of successive packets are larger than the preset threshold.

8. The device according to claim 7, further comprising:
a determining unit (430), configured to determine that the at least two compressed packets exist before the calculating unit (410) calculates the mean value of the lengths of the at least two compressed packets.

9. The device according to any one of claims 7 to 8, wherein the calculating unit (410) comprises a first subunit (510) and a second subunit (520), wherein:
the first subunit (510) is configured to record compression rates of the at least two compressed packets, wherein the compression rate is a ratio of the length of a compressed packet (22) to the length of an original packet (21); and
the second subunit (520) is configured to calculate a mean value of the compression rates of the at least two compressed packets recorded by the first subunit (510) and to multiply the mean value of the compression rates of the at least two compressed packets by the lengths of the original packets of the at least two compressed packets to obtain the mean value of the lengths of the at least two compressed packets.

10. The device according to any one of claims 7 to 8, wherein the calculating unit (410) comprises a first subunit (510) and a second subunit (520), wherein:
the first subunit (510) is configured to record compression rates of the at least two compressed packets, wherein the compression rate is a ratio of the length of the ROHC, robust header compression, header in the compressed packet to the sum of lengths of headers in the original packet; and
the second subunit (520) is configured calculate the mean value of the compression rates of the at least two compressed packets recorded by the first subunit (510) and to multiply the mean value of the compression rates by the length of packet header information in the original packet corresponding to one compressed packet to obtain the mean value of lengths of ROHC headers in the at least two compressed packets, and then to add the length of payload in the compressed packet to obtain the mean value of the lengths of the at least two compressed packets.

11. The device according to any one of claims 7 to 8, wherein the calculating unit (410) comprises:
a third subunit (610), configured to record the lengths of the at least two compressed packets; and
a fourth subunit (620), configured to calculate the mean value of the lengths of the at least two compressed packets according to at least two of the recorded lengths of the at least two compressed packets.

12. The device according to any one of claims 7 to 11, wherein the allocating unit (420) comprises:
a fifth subunit (710), which is configured to multiply the mean value of the lengths of the at least two compressed packets by an amplification rate; and
a sixth subunit (720), which is configured to allocate resources according to the mean value amplified by the fifth subunit (710).

13. A communication system comprising the device according to any one of claims 7 to 12.

## Patentansprüche

1. Verfahren zur Ressourcenzuweisung, umfassend:
Berechnen (102) eines Mittelwerts von Längen von mindestens zwei komprimierten Paketen, wobei die komprimierten Pakete erhalten werden, indem Header-Komprimierung an den Originalpaketen durchgeführt wird; und
Zuweisen von Ressourcen (103) gemäß dem berechneten Mittelwert der Längen der mindestens zwei komprimierten Pakete,
wobei das Berechnen (102) und das Zuweisen (103) während einer Übertragung von Datenpaketen auf eine Testphase und eine stabile Phase angewendet werden, wobei in der stabilen Phase Fluktuationswerte der Längen von aufeinander folgenden Paketen kleiner als ein vorgewählter Schwellenwert sind, während die Fluktuationswerte der Längen von aufeinander folgenden Paketen in der Testphase größer als der vorgewählte Schwellenwert sind.

2. Verfahren nach Anspruch 1, wobei das Verfahren vor dem Berechnen (102) des Mittelwerts der Längen der mindestens zwei komprimierten Pakete ferner umfasst:
Bestimmen (101), dass die mindestens zwei komprimierten Pakete vorhanden sind.

3. Verfahren nach Anspruch 1 oder 2, wobei das Berechnen (102) des Mittelwerts der Längen der mindestens zwei komprimierten Pakete umfasst:
Aufzeichnen von Kompressionsraten der mindestens zwei komprimierten Pakete,
wobei die Kompressionsrate ein Verhältnis der Länge eines komprimierten Pakets (22) zu der Länge eines Originalpakets (21) ist; und
Berechnen eines Mittelwerts der Kompressionsraten der aufgezeichneten mindestens zwei komprimierten Pakete und Multiplizieren des Mittelwerts der Kompressionsraten der mindestens zwei komprimierten Pakete mit den Längen der Originalpakete der mindestens zwei komprimierten Pakete, um den Mittelwert der Längen der mindestens zwei komprimierten Pakete zu erhalten.

4. Verfahren nach Anspruch 1 oder 2, wobei das Berechnen (102) des Mittelwerts der Längen der mindestens zwei komprimierten Pakete umfasst:
Aufzeichnen von Kompressionsraten der mindestens zwei komprimierten Pakete, wobei eine Kompressionsrate ein Verhältnis der Länge eines ROHC-, "Robust Header Compression", -Headers in einem komprimierten Paket (22) zu der Länge der Paket-Header-Informationen in dem Originalpaket (21) ist;
Berechnen eines Produkts des Mittelwerts der Kompressionsraten und der Länge der Paket-Header-Informationen in dem Originalpaket entsprechend einem komprimierten Paket, das verwendet wurde, um den Mittelwert der Kompressionsraten zu berechnen, und Addieren der Länge der Nutzdaten in dem komprimierten Paket, um so den Mittelwert der Längen der komprimierten Pakete zu erhalten.

5. Verfahren nach Anspruch 1 oder 2, wobei das Berechnen (102) des Mittelwerts der Längen der mindestens zwei komprimierten Pakete umfasst:
Aufzeichnen der Längen der mindestens zwei komprimierten Pakete und
Berechnen des Mittelwerts der Längen der mindestens zwei komprimierten Pakete gemäß mindestens zwei der aufgezeichneten Längen der mindestens zwei komprimierten Pakete.

6. Verfahren nach einem der Ansprüche 1 bis 5, wobei das Zuweisen (103) von Ressourcen gemäß dem Mittelwert der Längen der mindestens zwei komprimierten Pakete umfasst:
Multiplizieren des Mittelwerts der Längen der mindestens zwei komprimierten Pakete mit einer Vervielfältigungsrate; und
Zuweisen von Ressourcen gemäß dem vervielfältigten Mittelwert.

7. Vorrichtung, umfassend:
eine Recheneinheit (410), die konfiguriert ist, um während einer Übertragung von Datenpaketen in einer Testphase und einer stabilen Phase einen Mittelwert von Längen von mindestens zwei komprimierten Paketen zu berechnen, wobei die komprimierten Pakete erhalten werden, indem Header-Komprimierung an Originalpaketen durchgeführt wird; und
eine Zuweisungseinheit (420), die konfiguriert ist, um während der Übertragung von Datenpaketen in der Testphase und der stabilen Phase Ressourcen gemäß dem berechneten Mittelwert der Längen der mindestens zwei komprimierten Pakete zuzuweisen, wobei in der stabilen Phase Fluktuationswerte der Längen von aufeinander folgenden Paketen kleiner als ein vorgewählter Schwellenwert sind, während in der Testphase die Fluktuationswerte der Längen von aufeinander folgenden Paketen größer als der vorgewählte Schwellenwert sind.

8. Vorrichtung nach Anspruch 7, ferner umfassend:
eine Bestimmungseinheit (430), die konfiguriert ist, um zu bestimmen, dass die mindestens zwei komprimierten Pakete vorhanden sind, bevor die Recheneinheit (410) den Mittelwert der Längen der mindestens zwei komprimierten Pakete berechnet.

9. Vorrichtung nach einem der Ansprüche 7 bis 8, wobei die Recheneinheit (410) eine erste Untereinheit (510) und eine zweite Untereinheit (520) umfasst, wobei:
die erste Untereinheit (510) konfiguriert ist, um Kompressionsraten der mindestens zwei komprimierten Pakete aufzuzeichnen, wobei die Kompressionsrate ein Verhältnis der Länge eines komprimierten Pakets (22) zu der Länge eines Originalpakets (21) ist; und
die zweite Untereinheit (520) konfiguriert ist, um einen Mittelwert der Kompressionsraten der von der ersten Untereinheit (510) aufgezeichneten mindestens zwei komprimierten Pakete zu berechnen und den Mittelwert der Kompressionsraten der mindestens zwei komprimierten Pakete mit den Längen der Originalpakete der mindestens zwei komprimierten Pakete zu multiplizieren, um den Mittelwert der Längen der mindestens zwei komprimierten Pakete zu erhalten.

10. Vorrichtung nach einem der Ansprüche 7 bis 8, wobei die Recheneinheit (410) eine erste Untereinheit (510) und eine zweite Untereinheit (520) umfasst, wobei:
die erste Untereinheit (510) konfiguriert ist, um Kompressionsraten der mindestens zwei komprimierten Pakete aufzuzeichnen, wobei die Kompressionsrate ein Verhältnis der Länge des ROHC-, "Robust Header Compression", -Headers in dem komprimierten Paket zu der Summe der Längen von Headern in dem Originalpaket ist; und
die zweite Untereinheit (520) konfiguriert ist, um den Mittelwert der Kompressionsraten der von der ersten Untereinheit (510) aufgezeichneten mindestens zwei komprimierten Pakete zu berechnen und den Mittelwert der Kompressionsraten mit der Länge der Paket-Header-Informationen in dem Originalpaket zu multiplizieren, das einem komprimierten Paket entspricht, um den Mittelwert der Längen von ROHC-Headern in den mindestens zwei komprimierten Paketen zu erhalten, und dann die Länge der Nutzdaten in dem komprimierten Paket zu addieren, um den Mittelwert der Längen der mindestens zwei komprimierten Pakete zu erhalten.

11. Vorrichtung nach einem der Ansprüche 7 bis 8, wobei die Recheneinheit (410) umfasst:
eine dritte Untereinheit (610), die konfiguriert ist, um die Längen der mindestens zwei komprimierten Pakete aufzuzeichnen; und
eine vierte Untereinheit (620), die konfiguriert ist, um den Mittelwert der Längen der mindestens zwei komprimierten Pakete gemäß mindestens zwei der aufgezeichneten Längen der mindestens zwei komprimierten Pakete zu berechnen.

12. Vorrichtung nach einem der Ansprüche 7 bis 11, wobei die Zuweisungseinheit (420) umfasst:
eine fünfte Untereinheit (710), die konfiguriert ist, um den Mittelwert der Längen der mindestens zwei komprimierten Pakete mit einer Vervielfältigungsrate zu multiplizieren; und
eine sechste Untereinheit (720), die konfiguriert ist, um Ressourcen gemäß dem Mittelwert, der durch die fünfte Untereinheit (710) vervielfältigt wurde, zuzuweisen.

13. Kommunikationssystem, umfassend die Vorrichtung nach einem der Ansprüche 7 bis 12.

## Revendications

1. Procédé d'affectation de ressources, consistant à :
calculer (102) une valeur moyenne de longueurs d'au moins deux paquets compressés, les paquets compressés étant obtenus en réalisant une compression d'en-tête sur des paquets d'origine ; et
affecter des ressources (103) selon la valeur moyenne calculée des longueurs des au moins deux paquets compressés,
le calcul (102) et l'affectation (103) étant appliqués à une étape de test et à une étape stable pendant une transmission de paquets de données, des valeurs de fluctuation des longueurs de paquets successifs étant inférieures à un seuil prédéfini pendant l'étape stable, tandis que les valeurs de fluctuation des longueurs de paquets successifs étant supérieures au seuil prédéfini pendant l'étape de test,

2. Procédé selon la revendication 1, le procédé consistant en outre, avant le calcul (102) de la valeur moyenne des longueurs des au moins deux paquets compressés, à :
déterminer (101) que les au moins deux paquets compressés existent.

3. Procédé selon la revendication 1 ou 2, dans lequel le calcul (102) de la valeur moyenne des longueurs des au moins deux paquets compressés consiste à :
enregistrer des taux de compression des au moins deux paquets compressés, le taux de compression étant un rapport entre la longueur d'un paquet compressé (22) et la longueur d'un paquet d'origine (21) ; et
calculer une valeur moyenne des taux de compression enregistrés des au moins deux paquets compressés, et multiplier la valeur moyenne des taux de compression des au moins deux paquets compressés par les longueurs des paquets d'origine des au moins deux paquets compressés afin d'obtenir la valeur moyenne des longueurs des au moins deux paquets compressés.

4. Procédé selon la revendication 1 ou 2, dans lequel le calcul (102) de la valeur moyenne des longueurs des au moins deux paquets compressés consiste à :
enregistrer des taux de compression des au moins deux paquets compressés, un taux de compression étant un rapport entre la longueur d'un en-tête avec compression robuste d'en-tête (ROHC) dans un paquet compressé (22) et la longueur de l'information d'en-tête de paquet dans le paquet d'origine (21) ; et
calculer un produit de la valeur moyenne des taux de compression et de la longueur de l'information d'en-tête de paquet dans le paquet d'origine correspondant à un paquet compressé utilisé pour calculer la valeur moyenne des taux de compression, et ajouter la longueur de la charge utile dans le paquet compressé, de manière à obtenir la valeur moyenne des longueurs des paquets compressés.

5. Procédé selon la revendication 1 ou 2, dans lequel le calcul (102) de la valeur moyenne des longueurs des au moins deux paquets compressés consiste à :
enregistrer les longueurs des au moins deux paquets compressés ; et
calculer la valeur moyenne des longueurs des au moins deux paquets compressés selon au moins deux des longueurs enregistrées des au moins deux paquets compressés.

6. Procédé selon l'une quelconque des revendications 1 à 5, dans lequel l'affectation (103) de ressources selon la valeur moyenne des longueurs des au moins deux paquets compressés consiste à :
multiplier la valeur moyenne des longueurs des au moins deux paquets compressés par un taux d'amplification ; et
affecter des ressources selon la valeur moyenne amplifiée.

7. Dispositif, comprenant :
une unité de calcul (410), configurée pour calculer, pendant une étape de test et une étape stable pendant une transmission de paquets de données, une valeur moyenne de longueurs d'au moins deux paquets compressés, les paquets compressés étant obtenus en réalisant une compression d'en-tête sur des paquets d'origine ; et
une unité d'affectation (420), configurée pour affecter, pendant l'étape de test et l'étape stable pendant la transmission de paquets de données, des ressources selon la valeur moyenne calculée des longueurs des au moins deux paquets compressés, des valeurs de fluctuation des longueurs de paquets successifs étant inférieures à un seuil prédéfini pendant l'étape stable, tandis que les valeurs de fluctuation des longueurs de paquets successifs étant supérieures au seuil prédéfini pendant l'étape de test.

8. Dispositif selon la revendication 7, comprenant en outre :
une unité de détermination (430), configurée pour déterminer que les au moins deux paquets compressés existent avant que l'unité de calcul (410) ne calcule la valeur moyenne des longueurs des au moins deux paquets compressés.

9. Dispositif selon l'une quelconque des revendications 7 et 8, dans lequel l'unité de calcul (410) comprend une première sous-unité (510) et une deuxième sous-unité (520),
la première sous-unité (510) étant configurée pour enregistrer des taux de compression des au moins deux paquets compressés, le taux de compression étant un rapport entre la longueur d'un paquet compressé (22) et la longueur d'un paquet d'origine (21) ; et
la deuxième sous-unité (520) étant configurée pour calculer une valeur moyenne des taux de compression, enregistrés par la première sous-unité (510), des au moins deux paquets compressés, et pour multiplier la valeur moyenne des taux de compression des au moins deux paquets compressés par les longueurs des paquets d'origine des au moins deux paquets compressés afin d'obtenir la valeur moyenne des longueurs des au moins deux paquets compressés.

10. Dispositif selon l'une quelconque des revendications 7 et 8, dans lequel l'unité de calcul (410) comprend une première sous-unité (510) et une deuxième sous-unité (520),
la première sous-unité (510) étant configurée pour enregistrer des taux de compression des au moins deux paquets compressés, le taux de compression étant un rapport entre la longueur de l'en-tête avec compression robuste d'en-tête (ROHC) dans le paquet compressé et la somme de longueurs d'en-têtes dans le paquet d'origine ; et
la deuxième sous-unité (520) étant configurée pour calculer la valeur moyenne des taux de compression, enregistrés par la première sous-unité (510), des au moins deux paquets compressés, et pour multiplier la valeur moyenne des taux de compression par la longueur de l'information d'en-tête de paquet dans le paquet d'origine correspondant à un paquet compressé afin d'obtenir la valeur moyenne de longueurs d'en-têtes ROHC dans les au moins deux paquets compressés, puis ajouter la longueur de la charge utile dans le paquet compressé par les longueurs des paquets d'origine des au moins deux paquets compressés afin d'obtenir la valeur moyenne des longueurs des au moins deux paquets compressés.

11. Dispositif selon l'une quelconque des revendications 7 à 8, dans lequel l'unité de calcul (410) comprend :
une troisième sous-unité (610), configurée pour enregistrer les longueurs des au moins deux paquets compressés ; et
une quatrième sous-unité (620), configurée pour calculer la valeur moyenne des longueurs des au moins deux paquets compressés selon au moins deux des longueurs enregistrées des au moins deux paquets compressés.

12. Dispositif selon l'une quelconque des revendications 7 à 11, dans lequel l'unité d'affectation (420) comprend :
une cinquième sous-unité (710), configurée pour multiplier la valeur moyenne des longueurs des au moins deux paquets compressés par un taux d'amplification ; et
une sixième sous-unité (720), configurée pour affecter des ressources selon la valeur moyenne amplifiée par la cinquième sous-unité (710).

13. Système de communication comprenant le dispositif selon l'une quelconque des revendications 7 à 12.
